Europäisches Patentamt

European Patent Office

Office européen des brevets

(11) Publication number: **0 506 394 A2**

# EUROPEAN PATENT APPLICATION

(21) Application number: 92302616.5

(22) Date of filing: 26.03.92

(51) Int. Cl.5: **G10L 7/00**

(30) Priority: 29.03.91 JP 91548/91
30.03.91 JP 92741/91

(43) Date of publication of application:
**30.09.92 Bulletin 92/40**

(84) Designated Contracting States:
**AT DE FR GB IT NL**

(71) Applicant: **SONY CORPORATION**
**7-35 Kitashinagawa 6-chome Shinagawa-ku**
**Tokyo 141(JP)**

(72) Inventor: **Akagiri, Kenzo, Patents Division**
**c/o Sony Corporation 6-7-35 Kitashinagawa**
**Shinagawa-ku Tokyo 141(JP)**
Inventor: **Tsutsui, Kyoya, Patents Division**
**c/o Sony Corporation 6-7-35 Kitashinagawa**
**Shinagawa-ku Tokyo 141(JP)**

(74) Representative: **Thomas, Christopher Hugo et**
**al**
**D Young & Co 10 Staple Inn**
**London WC1V 7RD(GB)**

(54) Coding apparatus for digital signals.

(57) A coding apparatus comprising a band division filter (11) for dividing an input digital signal into signal components in a plurality of frequency bands, a block floating circuit (16) for implementing, every block, floating processing of an output signal of the band division filter (11), a plurality of orthogonal transform circuits (13, 14, 15) for orthogonally transforming respective output signals on the time base of the block floating circuit to signals on the frequency base, and an adaptive bit allocation encoder (18) for dividing output signals of the orthogonal transform circuits (13, 14, 15) into signal components in critical bands adaptively to allocate bit numbers thereto on the basis of allowed noise levels of respective critical bands, wherein the length in the time base direction of the blocks is caused to be variable, and the length in the time base direction of the blocks and a floating coefficient used in the floating processing are determined on the basis of the same index.

FIG.1

This invention relates to coding apparatus for digital signals.

One way of achieving bit compression when encoding, for example, an audio signal, uses the so-called block floating method in which input data are divided into data blocks every predetermined number of words, and floating processing is effected on each block. In this method the maximum absolute value os the words in a block is found, and floating processing is effected using this maximum absolute value as a common floating coefficient for all the words in that block.

Another known method uses so-called orthogonal transform coding to transfer a signal on the time base to a signal on the frequency base for encoding. In this method, audio PCM data, for example, are divided into data blocks every predetermined number of words and discrete cosine transform (DCT) processing is effected on each block.

A method is also known in which a signal is divided into signal components falling in respective critical frequency bands, to which bands adaptive bit allocations are made. The number of bits allocated is determined in dependence upon allowed noise levels in the respective bands, taking into account so-called masking.

There are many instances where the operational processing for such orthogonal transformation uses a finite-duration impulse-response (FIR) filter of the multi-tap type. Such processing includes a coefficient multiplication process and/or an operation for deriving a sum total, resulting in the possibility that the number of digits may be increased so that it overflows. To prevent such an overflow, it is required to allow in advance for increase in the number of digits, for example by several orders relative to the number of digits in the input data. For such multi-digit operation, a high performance digital signal processing (DSP) unit is required, and moreover the processing takes a significant time, so there is a requirement for simpler orthogonal transform processing.

Accordingly it has been proposed to implement the above-mentioned block floating processing of input data prior to the orthogonal transform processing, thereby to reduce the number of digits of data subject to the orthogonal transfer operation.

Further, a technique has been also proposed adaptively to vary the length of a block for the orthogonal transform processing in dependence upon an input signal. Such a technique is employed because, particularly in the case of dividing in advance an input signal into signal components in say three bands, to carry out orthogonal transform processing on the respective bands, a method of varying the length of a block in respective bands permits more efficient coding.

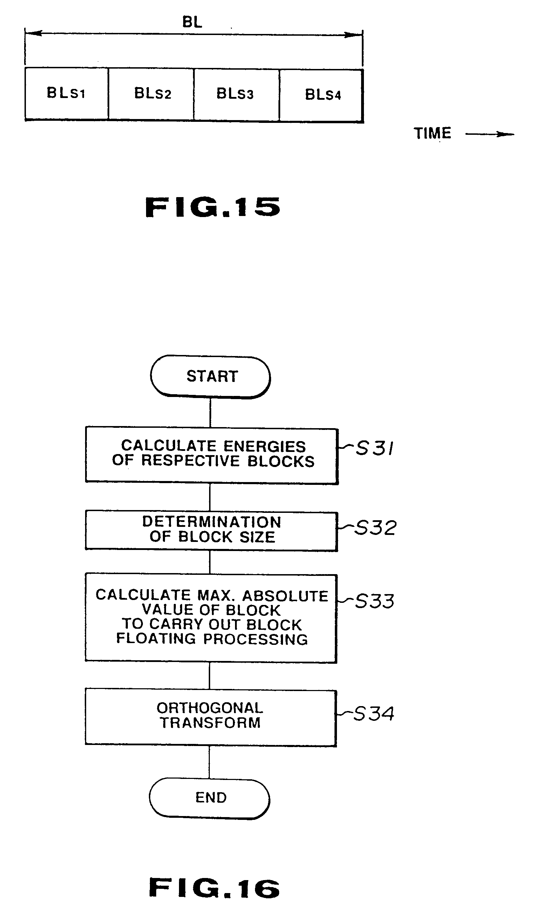

However, where block floating is applied prior to orthogonal transform processing, problems arise, as will now be described with reference to Figure 15 and 16.

For example, as shown in Figure 15, a relatively large block BL is divided in advance into several blocks (for example, four blocks), to form small blocks $BL_{S1}$, $BL_{S2}$, $BL_{S3}$ and $BL_{S4}$. As indicated by step S31 of Figure 16, the respective energies of the small blocks $BL_{S1}$, $BL_{S2}$, $BL_{S3}$ and $BL_{S4}$ are calculated for determination of the size of a variable length block (block length) to determine, at the next step S32, a block size in dependence upon the energies of the respective blocks. Then, at step S33, a maximum absolute value within a determined block is calculated to implement block floating processing on the basis of the maximum absolute value thus calculated. At the next step S34, the orthogonal transform processing such as DCT for this block is carried out.

In such a processing procedure, the calculation of energies for every small block $BL_{S1}$, $BL_{S2}$, $BL_{S3}$ and $BL_{S4}$ for determination of block size (block length), and the calculation of the maximum absolute values of respective blocks for the block floating processing are required. As a result, the amount of processing or the number of processing steps in the controlling microprogram is increased.

Moreover, with respect to allowed noise levels determined for respective critical bands in consideration of the above-mentioned masking, a method has been proposed to correct such allowed noise levels by taking into consideration the so-called minimum audible characteristic in human hearing. With this method, an allowed noise level already calculated and a minimum audible level are compared with each other, and the larger is used as a new allowed noise level.

The allowed noise level in which the masking has been taken into consideration is considered to be the same level in the above-mentioned critical band. However, since a measured value of the minimum audible limit is given by using a sine wave, particularly in the region where the critical bandwidth is broad as in a high frequency band, a value at a low frequency portion and a value at a high frequency portion within the same critical band differ considerably from each other. For this reason, if a single minimum audible limit level were used for every critical band, errors would become large, resulting in the possibility that there may be useless allocated bits at the high frequency portion within the critical band.

In addition, although it is in theory possible to divide the critical band finely into small bands to give minimum audible limits for every such small divided band, this is not preferable because the quantity of information to be transmitted is increased.

According to the present invention there is provided a coding apparatus for a digital signal, the apparatus comprising:

a band division filter for dividing an input digital signal into signal components in a plurality of frequency bands;

a block floating circuit for implementing, every block, floating processing of an output signal of the band division filter;

a plurality of orthogonal transform circuits for orthogonally transforming respective output signals on the time base of the block floating circuit to signals on the frequency base; and

an adaptive bit allocation encoder for dividing output signals of the orthogonal transform circuits into signal components in critical bands adaptively to allocate bit numbers thereto on the basis of allowed noise levels of respective critical bands;

wherein the length in the time base direction of the blocks is caused to be variable, and the length in the time base direction of the blocks and a floating coefficient used in the floating processing are determined on the basis of the same index.

According to the present invention there is also provided a coding apparatus for a digital signal, the apparatus comprising:

a band division filter for dividing an input digital signal into signal components in a plurality of frequency bands;

a block floating circuit for implementing, every block, floating processing of an output signal of the band division filter;

a plurality of orthogonal transform circuits for orthogonally transforming respective output signals on the time base of the block floating circuit to signals on the frequency base; and

an adaptive bit allocation encoder for dividing output signals of the orthogonal transform circuits into signal components in critical bands adaptively to allocate bit numbers thereto on the basis of allowed noise levels of respective critical bands;

allowed noise level calculation means for calculating allowed noise levels obtained within the critical band every critical band; and

comparison means for comparing a corresponding allowed noise level with a minimum audible level to raise or set a flag when the minimum audible level is higher than the allowed noise level;

wherein, in the critical band where the comparison raises the flag, the level of the minimum audible curve is selected as the allowed noise level.

According to the present invention there is also provided a coding apparatus for a digital signal, the apparatus comprising:

a band division filter for dividing an input digital signal into signal components in a plurality of frequency bands;

a block floating circuit for implementing, every block, floating processing of an output signal of the band division filter;

a plurality of orthogonal transform circuits for orthogonally transforming respective output signals on the time base of the block floating circuit to signals on the frequency base; and

an adaptive bit allocation encoder for dividing output signals of the orthogonal transform circuits into signal components in critical bands adaptively to allocate bit numbers thereto on the basis of allowed noise levels of respective critical bands;

allowed noise level calculation means for calculating allowed noise levels obtained within the critical band every critical band; and

comparison means for comparing a corresponding allowed noise level with a minimum audible level to raise or set a flag when the minimum audible level is higher than the allowed noise level;

where the length in the time base direction of the block is caused to be variable, and the length in the time base direction of the block and a floating coefficient at the time of the floating processing are determined on the basis of the same index; and

wherein, in the critical band where the comparison means raises the flag, the level of the minimum audible curve is selected as the allowed noise level.

Embodiments of the invention can provide a coding apparatus for a digital signal where if block floating processing is effected prior to the orthogonal transform processing and adaptively changing the length of a block in dependence upon an input signal, the amount of processing can be reduced, and errors related to a minimum audible level within a critical band when it is employed as the allowed noise level can be reduced.

Such coding apparatus can carry out block floating processing of an input digital signal on a variable length block, thereafter to implement orthogonal transform processing. In such coding apparatus, by determining the length of a variable length block and a floating coefficient of the block floating on the basis of the same index, it is possible to reduce the data to be quantized or the number of steps of a program.

Moreover, when an allowed noise level for each critical bands is determined by the minimum audible level, bit allocation is carried out by an allowed noise level for every small band obtained by further dividing the critical band, so as only to transmit a flag indicating this, thus avoiding the necessity of sending an allowed noise level for every small band. Accordingly, accurate allowed noise levels can be provided without increasing the amount of auxiliary data. Thus signal quality can be improved without degrading bit compression efficiency. In addition, even if an absolute value of the minimum audible limit level is altered later, compatibility can be maintained.

The invention will now be described by way of example with reference to the accompanying drawings, throughout which like parts are referred to by like references, and in which:

Figure 1 is a circuit diagram showing, in a block form, an embodiment of coding apparatus for a digital signal, according to the invention;

Figure 2 is a view showing an actual example of divided bands and formation of blocks in the time base direction in the respective bands in the embodiment;

Figure 3 is a flowchart for explaining an encoding operation in this embodiment;

Figure 4 is a chart showing a critical band;

Figure 5 is a flowchart for explaining a decoding operation in the embodiment;

Figure 6 is a chart showing a critical band;

Figure 7 shows an example where a block size in the time base direction in respective bands is switched between two sizes;

Figure 8 shows an example where a block size in the time base direction in respective bands is switched between three sizes;

Figure 9 is a flowchart for explaining the operation of the embodiment;

Figure 10 is a circuit diagram showing, in a block form, an example of an allowed noise calculation circuit of Figure 1;

Figure 11 shows a bark spectrum;

Figure 12 shows a masking spectrum;

Figure 13 shows a minimum audible curve and a masking spectrum synthesized;

Figure 14 is a block diagram showing in block form an example of a decoder to which the embodiment can be applied;

Figure 15 shows block lengths in a previously proposed processing method; and

Figure 16 is a flowchart showing an example of previously proposed block floating processing.

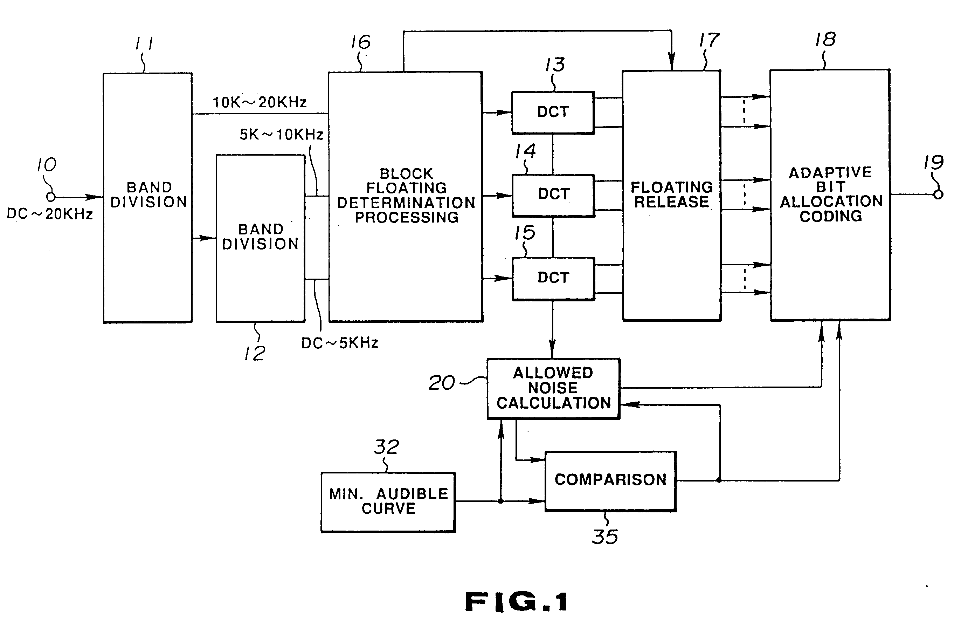

The embodiment of coding apparatus to be disclosed is for coding an input digital signal, such as an audio PCM signal, using sub-band division coding (SBC), adaptive transform coding (ATC), and adaptive bit allocation (APC-AC). In the apparatus of the embodiment shown in Figure 1, an input digital signal is divided into signal components in a plurality of frequency bands, settings are made such that the bandwidths become broader as the frequency increases, and orthogonal transform processing is effected in respective frequency bands to apply adaptive bit allocation to spectrum data on the frequency base in so-called critical bands, with human hearing characteristics taken into consideration. In addition, in the embodiment, a technique is also employed adaptively to vary a block size (block length) in dependence upon an input signal, prior to the orthogonal transform processing, and to carry out floating processing on every block.

Referring to Figure 1, an input terminal 10 is supplied with an audio PCM signal of, for example, 0 to 20 KHz. This input signal is divided into a signal in the frequency band of 0 to 10 KHz and a signal in the frequency band of 10 to 20 KHz using a band division filter 11, such as a so-called QMF filter, and the signal in the frequency band of 0 to 10 KHz is further divided into a signal in the frequency band of 0 to 5 KHz and a signal in the frequency band of 5 to 10 KHz, similarly using a band division filter 12, such as a QMF filter. The signal in the frequency band of 10 to 20 KHz from the band division filter 11 is supplied to a discrete cosine transform (DCT) circuit 13 serving as an orthogonal transform circuit, the signal in the frequency band of 5 to 10 KHz from the band division filter 12 is supplied to a DCT circuit 14, and the signal in the frequency band of 0 to 5 KHz from the band division filter 12 is supplied to a DCT circuit 15. Thus, these signals are subjected to respective DCT processing.

To reduce the amount of orthogonal transform processing, block floating processing is applied to the input data on the time base prior to the orthogonal transform processing to effect bit compression.

Thus, data on the time base of respective bands obtained from the band division filters 11 and 12 are supplied to a block floating processing circuit 16, where block floating processing is carried out with respective blocks BL as shown in Figure 15 as a unit. At the respective orthogonal DCT circuits 13, 14 and 15, orthogonal transform processing is effected on the data which have undergone such block floating processing. Thereafter the above-mentioned block floating is released by a floating release circuit 17. In releasing the block floating, floating information from the block floating processing circuit 16 is used. Also in the case of determining floating coefficients in the block floating processing, an approach may be adopted to take a logical sum of absolute values of respective words in a block as previously described.

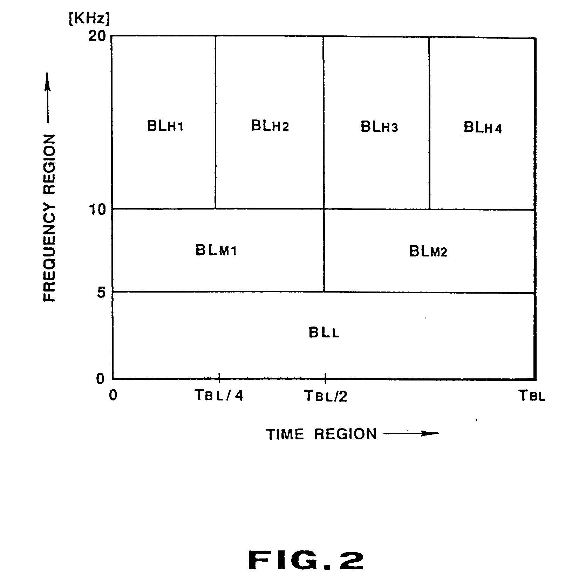

An actual example of a standard input signal with respective blocks corresponding to respective frequency bands and supplied to the DCT circuits 13, 14 and 15 is shown in Figure 2. In the actual example of Figure 2, a scheme is employed such that as the frequency increases, the frequency bandwidth is increased and the time resolution is improved (the block length is caused to be short). Namely, for a signal in the frequency band of 0 to 5 KHz on a lower frequency band side, one block $BL_L$ is caused to have, for example, 1024 samples. For a signal in the medium frequency band of 5 to 10 KHz, the signal is divided into signal components in blocks $BL_{M1}$ and $LB_{M2}$ each having a length $T_{BL}/2$ (one half of a length $T_{BL}$ of the block $BL_L$ on the low frequency band side). For a signal in the frequency band of 10 to 20 KHz on a higher frequency band side, the signal is divided into signal components in blocks $BL_{H1}$, $BL_{H2}$ $BL_{H3}$ and $BL_{H4}$ each having a length $T_{BL}/4$. Where the frequency band of the input signal is 0 to 22 KHz, the low frequency band is 0 to 5.5 KHz, the medium frequency band is 5.5 to 11 KHz, the high frequency band is 11 to 22 KHz.

It is to be noted that, in this embodiment, as described later, the block size (block length) is caused to be variable in dependence upon an input signal, and determination of the block size is carried out on the basis of a maximum absolute value also used for determining floating coefficients of the block floating.

Turning back to Figure 1, spectrum data or DCT coefficient data on the frequency base, obtained as the result of the DCT processing at the respective DCT circuits 13, 14 and 15, are subjected to releasing of the block floating processing at the floating release circuit 17, and are then combined in every so-called critical band. The data thus obtained are further supplied to an adaptive bit allocation encoder 18. The critical band is a frequency band divided in consideration of the hearing sense characteristic of a human being, and is a band that a narrow band noise having the same intensity as that of a pure sound in the vicinity of a frequency thereof has when the pure sound is masked by that noise. This critical band is such that as the frequency shifts to a higher frequency, the bandwidth becomes broader, and the entire frequency band of 0 to 20 KHz is divided into, for example, 25 critical bands.

An allowed noise calculation circuit 20 calculates allowed noise quantities for every critical band, in which the so-called masking effect, etc. is taken into consideration, on the basis of spectrum data divided into every critical band, to calculate allocated bit numbers for each critical band on the basis of the allowed noise quantities and energies or peak values, etc. In dependence upon the bit numbers allocated to each critical band by the adaptive bit allocation encoder 18, respective spectrum data (or DCT coefficient data) are requantized. Data thus coded are derived through an output terminal 19.

The allowed noise calculation circuit 20 is supplied with respective minimum audible levels for every band from a minimum audible curve generator 32. Each minimum audible level is compared with an allowed noise level in which the above-mentioned masking effect is taken into consideration at a comparator 35. As a result, when the minimum audible level is higher than the allowed noise level. At this time, the approach is employed of dividing the critical band into smaller regions by taking into consideration an error or the minimum audible level, particularly in bands where the critical bandwidth is broad, to allow the minimum audible levels of these small divided bands to be respective allowed noise levels, thus to carry out bit allocation for every small divided band respectively.

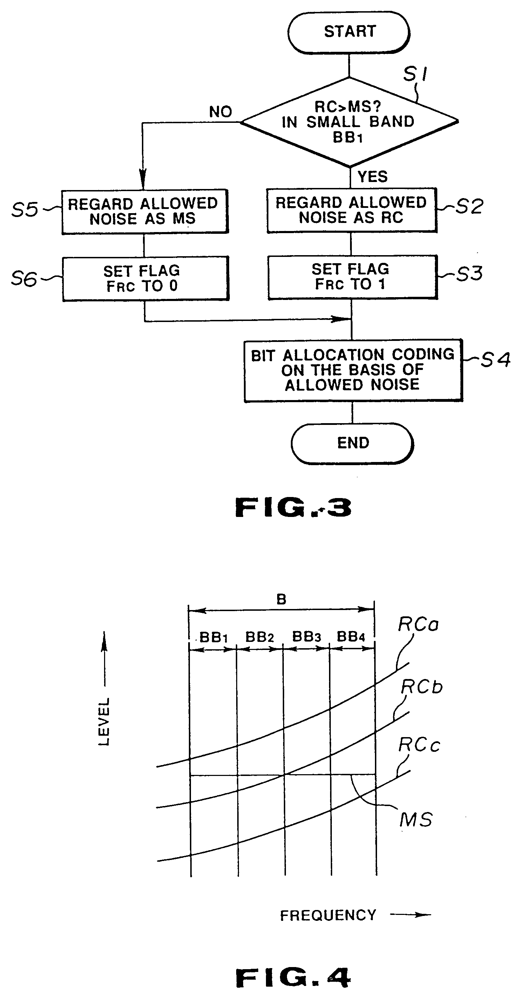

The operation will now be described with reference to Figures 3 and 4.

Figure 3 is a flowchart for explaining the operation, and Figure 4 shows the example where one critical band B is divided into smaller regions BB (four regions in the example of Figure 4).

Initially, in a step S1 of Figure 3, there is carried out discrimination as to whether or not the level of the minimum audible curve RC of the small band $BB_1$ on the lowest frequency side of the four small bands $BB_1$ to $BB_4$ of one critical band B is higher than the level of a masking spectrum which is a presently allowed noise determined in consideration of the masking (RC>MS). When the discriminated result at this step S1 is YES (the level of the minimum audible curve RC is higher than the level of the masking spectrum MS), the operation proceeds to step S2 to consider the allowed noise as a minimum audible curve RC, to raise or set a flag $F_{RC}$ at the next step S3 ($F_{RC}=1$). Subsequently, the operation proceeds to step S4 to conduct an adaptive bit allocation in dependence upon the level of the minimum audible curve RC, which is an allowed noise to carry out coding. On the contrary, when the discriminated result at the step S1 is NO, the operation proceeds to step S4 to consider the allowed noise as a masking spectrum to set the flag $F_{RC}$ to 0 at step S6, to proceed to the above-mentioned step S4.

When attention is drawn to one critical band B as shown in Figure 4, the case where the minimum audible curve is RCa with respect to the masking spectrum MS as an allowed noise obtained at present, corresponds to the case where the discriminated result at the step S1 is YES, and the case where the minimum audible curve is RCb or RCc corresponds to the case where the discriminated result at the step S1 is NO. When the minimum audible curve is RCa, this minimum audible curve RCa becomes an allowed noise. Thus, bit allocation is carried out for every small band $BB_1$ to $BB_4$ in dependence upon allowed noise levels given for each small band $BB_1$ to $BB_4$. On the contrary, when the minimum audible curve is RCb or RCc, the allowed noise becomes the masking spectrum MS. Thus, bit allocation is carried out in dependence upon a single allowed noise level in the critical band B.

Meanwhile, in the case of transmitting the allowed noise level as auxiliary information along with quantized main information, even when the minimum audible curve RCa is considered as an allowed noise, the information transmitted is only a single allowed noise level in the critical band. This is because since the minimum audible curve is determined from the human hearing characteristic, a minimum audible curve pattern or relative value data, etc. can be stored in advance in a ROM, etc., thereby making it possible easily to determine the minimum audible level of other small bands $BB_2$ to $BB_4$ on the basis of the minimum audible level of, for example, the small band $BB_1$.

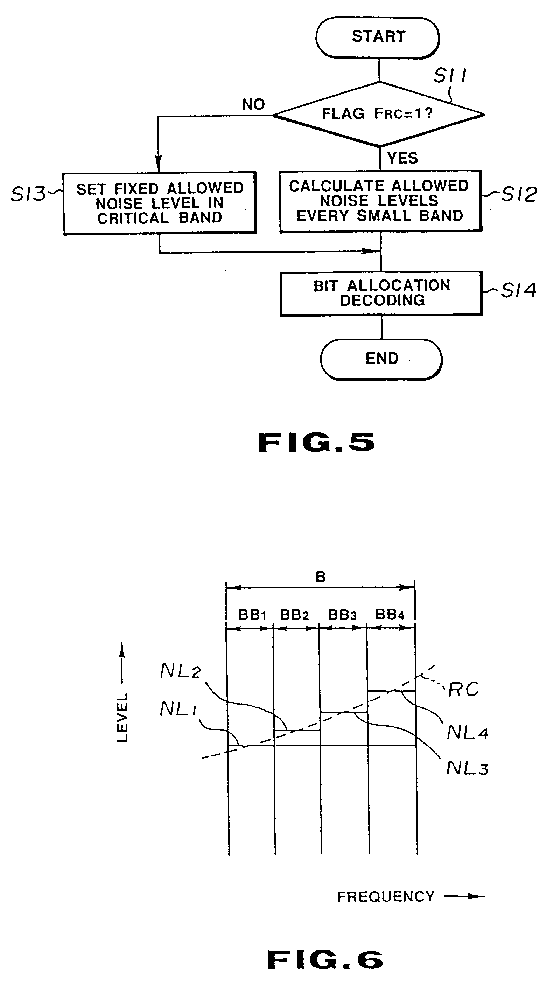

Figure 5 is a flowchart for explaining the decoding processing on a decoder side. At step S11 of Figure 5, discrimination as to whether or not the flag $F_{RC}$ is 1 effected. When the discriminated result is YES, that is, an allowed noise of the corresponding critical band is given by the minimum audible curve, allowed noise levels for each small band $BB_1$ to $BB_4$ are calculated at the next step S12. Even if only one allowed noise level with respect to a single critical band B, for example, an allowed noise level $NL_1$ of the small band $BB_1$ on the lowest frequency side is sent as shown in Figure 6, allowed noise levels $NL_2$ to $NL_4$ for each small band $BB_2$ to $BB_4$ can be determined by calculation from the pattern of the minimum audible curve RC by making use of a relative list, etc. of minimum audible values stored in a ROM, etc. as described above.

When the discriminated result at the step S11 is NO, that is, an allowed noise of the corresponding critical band is given by the masking spectrum MS, the operation proceeds to step S13 to set a fixed allowed noise in a single critical band B. On the basis of the allowed noise levels determined at these respective steps S12 and S13, bit allocation decoding processing is executed at the next step S14.

Meanwhile, the lengths of respective blocks (block sizes) in forming blocks in the time base direction, for each frequency band divided by the above-mentioned division filters 11 and 12 to carry out floating processing thereafter to conduct orthogonal transform processing, are adaptively switched in dependence upon an input signal.

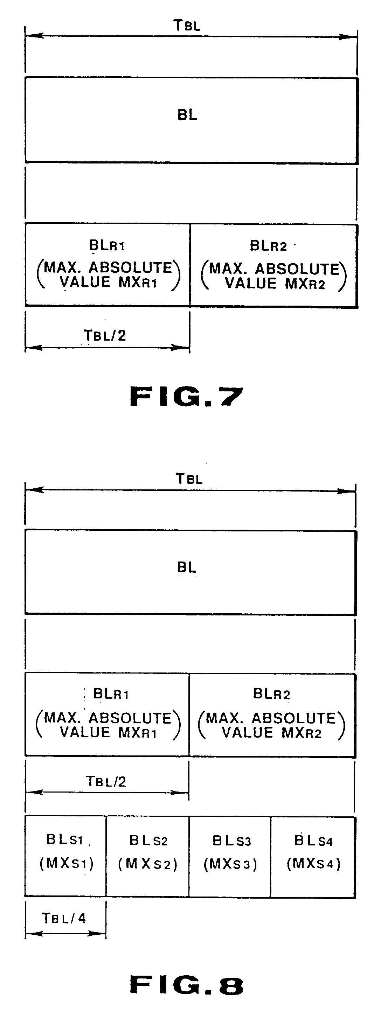

Explanation will now be given in connection with block size switching between a block BL having a large time width $T_{BL}$ and blocks $BL_{R1}$ and $BL_{R2}$ each having a block length of $T_{BL}/2$, as shown in Figure 7. First, maximum absolute values $MX_{R1}$ and $MX_{R2}$ in respective blocks with respect to smaller blocks $BL_{R1}$ and $BL_{R2}$ are determined. Then, comparison between these maximum absolute values $MX_{R1}$ and $MX_{R2}$ is made. When the ratio therebetween is as indicated by the following

equation (1):

$$MX_{R2}/MX_{R1} \geq 20 \qquad (1)$$

switching to the size of the smaller blocks $BL_{R1}$ and $BL_{R2}$ is made. When otherwise, the size of the larger block BL is selected.

Explanation will now be given in connection with the case where block size switching between a large block BL having a time width $T_{BL}$, medium blocks $BL_{R1}$ and $BL_{R2}$ having a block length $T_{BL}/2$, and small blocks $BL_{S1}$, $BL_{S2}$, $BL_{S3}$ and $BL_{S4}$ having a block length $T_{BL}/4$. First, respective maximum absolute values $MX_{S1}$, $MX_{S2}$, $MX_{S3}$ and $MX_{S4}$ in blocks of the small blocks $BL_{S1}$, $BL_{S2}$, $BL_{S3}$ and $BL_{S4}$ are determined. With respect to these four maximum values $MX_{S1}$, $MX_{S2}$, $MX_{S3}$ and $MX_{S4}$, when the following relationship as indicated by the following equation (2) holds:

$$MX_{Sn+1}/MX_{Sn} \geq 20 \qquad (2)$$

where n is 1, 2 or 3, the block size of the small blocks $BL_{S1}$, $BL_{S2}$, $BL_{S3}$ and $BL_{S4}$ having a length of $T_{BL}/4$ is selected. In contrast, when the above equation (2) is not satisfied, respective maximum absolute values $MX_{R1}$ and $MX_{R2}$ in blocks of the medium blocks $BL_{R1}$ and $BL_{R2}$ are composed. Whether or not the following equation (3) is satisfied is discriminated:

$$MX_{R2}/MX_{R1} \geq 10 \qquad (3)$$

When the above equation (3) is satisfied, the block size of the medium blocks $BL_{R1}$ and $BL_{R2}$ having a length $T_{BL}/2$ is selected. On the other hand, when otherwise, that is, the following equation (4) holds:

$$MX_{R2}/MX_{R1} < 10 \qquad (4)$$

the block size of the large block BL having a length $T_{BL}$ is selected.

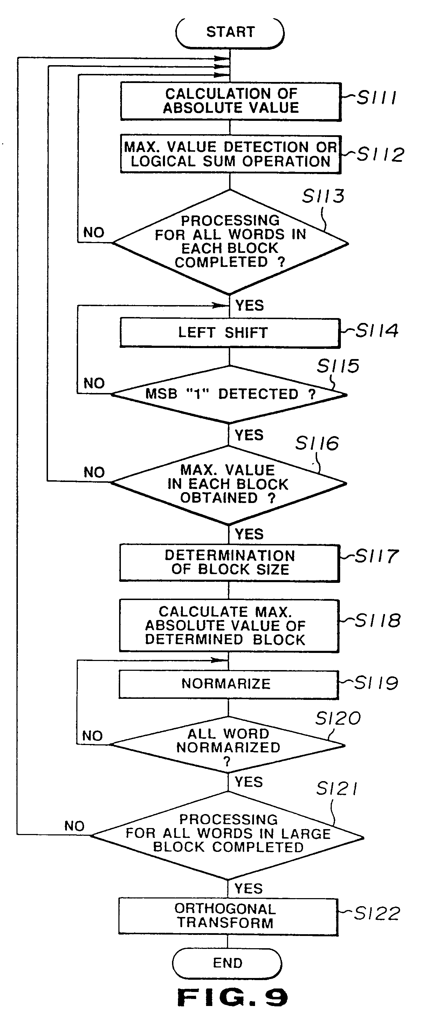

Figure 9 shows the procedure in realizing by software the processing from data input of respective words of an input digital signal to the orthogonal transform processing. In Figure 9, at step S111, absolute values of respective words are first calculated. At the next step S112, a maximum absolute value is detected. In place of detecting the maximum absolute value, a logical sum operation may be performed. At the next step S113, detection of a maximum absolute value of all the words in one block, or discrimination as to whether or not logical sum operation thereof has been completed, is carried out. This block is a block of respective selectable block sizes. When it is discriminated at the step S113 that the logical sum operation of all the words has not been completed (NO), the operation returns to the step S111. In contrast, when the logical sum operation of all the words is completed (YES), the operation proceeds to the next step S114.

Here, in the case of taking a logical sum of absolute values in a block at the step S112, the processing for detecting a maximum absolute value in a block becomes unnecessary. Thus, floating coefficients (shift quantities) can be determined by simple processing including only a logical sum operation.

The steps S114 and S115 correspond to the operation for detecting a shift quantity as a floating coefficient. At the step S114, left shift is carried out. At the step S115, whether or not the fact that the most significant bit (MSB) of the shift result is equal to "1" is detected is discriminated. When "1" is not detected as MSB at the step S115 (NO), the operation returns to the step S114. When "1" is detected (YES), the operation proceeds to the next step S116.

At the step S116, whether or not a maximum absolute value (or shift quantity) of all blocks of the respective sizes is obtained is discriminated. When the discriminated result is NO, the operation returns to the step S111. In contrast, when the discriminated result is YES, the operation proceeds to the next step S117. At the step S117, a block size is determined on the basis of the above equation (1) or the above equations (2) to (4) to calculate a maximum absolute value of the block thus determined. At the next step S119, respective words are normalized (are subjected to floating processing). At step S120, whether or not all the words in the determined block are normalized is discriminated. When the discriminated result is NO, the operation returns to the step S119. When the discriminated result is YES, the operation proceeds to the next step S121. At the step S121, discrimination is made as to whether or not, when, for example, the block size of the medium blocks $BL_{R1}$ and $BL_{R2}$ or the small blocks $BL_{S1},BL_{S2}$, $BL_{S3}$ and $BL_{S4}$, etc is selected, the processing with respect to all blocks in the range of the large block BL is completed. When the discriminated result is NO, the operation proceeds to the next step S122. At the step S122, the orthogonal transform processing is carried out. The processing is thus completed.

In this embodiment, by commonly using maximum absolute values (or logical sum outputs) calculated every block in determination of both the block floating coefficient and the block size, the amount of processing can be reduced. Thus, the number of steps in a processing microprogram can be reduced.

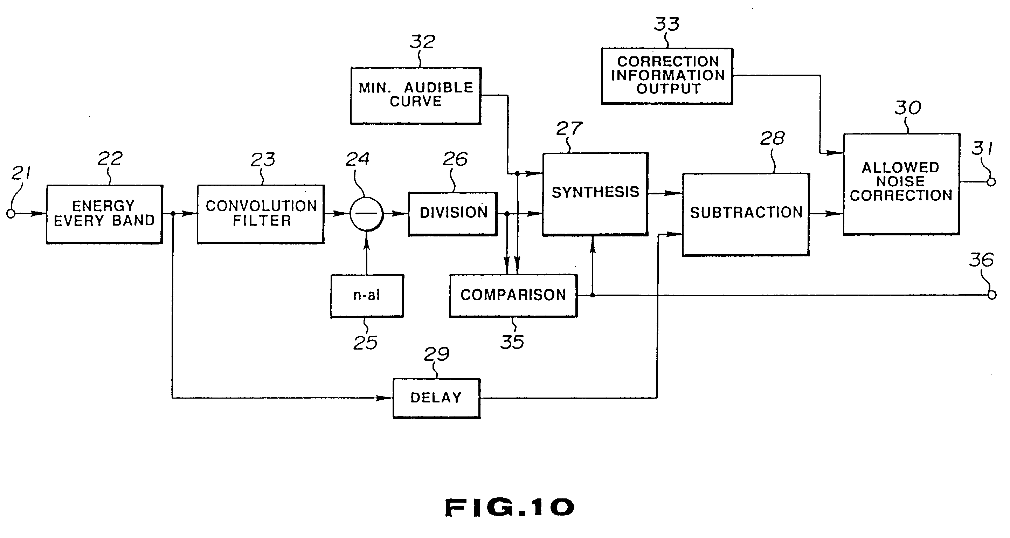

Figure 10 is a circuit diagram showing, in block form, the configuration of an actual example of the allowed noise calculation circuit 20. An input terminal 21 is supplied with spectrum data on the frequency base from the respective DCT circuits 13, 14 and 15. As this data, an amplitude value of the amplitude value and a phase value calculated on the basis of a real number component and an imaginary number component of DCT coefficient data obtained as the result of execution of DCT operation is used. This approach is employed because human hearing is generally sensitive to the amplitude (level, intensity) on the frequency base, but not to the phase.

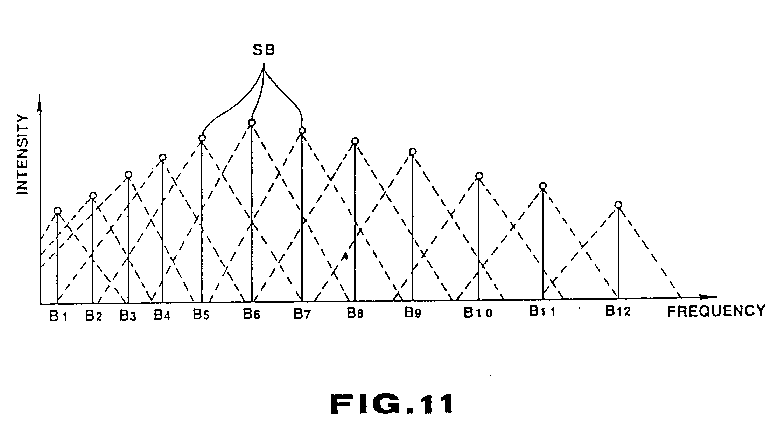

Input data on the frequency base are sent to an energy calculation circuit 22, at which the energy in every critical band is determined by using, for example, a method of calculating the sum total of respective amplitude values in a corresponding critical band, or any other method. In place of the energy in every band, there are instances where a peak value, or a mean value of the amplitude value may be used. An output from the energy calculation circuit 22, for example, a spectrum of sum total value of respective bands is generally called a bark spectrum. Figure 11 shows such a bark spectrum SB for respective critical bands. It is to be noted that, in order to simplify illustration in Figure 11, the number of critical bands is twelve ($B_1$ to $B_{12}$).

To allow for the influence in the so-called masking of the bark spectrum SB, a convolution processing is implemented on the bark spectrum SB to multiply it by a predetermined weighting function and to add the multiplied results. To realize this, an output from the energy calculation circuit 22 for every band, that is respective values of the bark spectrum SB, are supplied to a convolution filter circuit 23. This convolution filter circuit 23 comprises, for example, a plurality of delay elements for sequentially delaying input data, a plurality of multipliers (for example, 25 multipliers corresponding to respective bands) for multiplying outputs from these delay elements by filter coefficients (weighting functions), and a sum total adder for taking a sum total of respective multiplier outputs. By this convolution processing, the sum total of the portion indicated by dotted lines in Figure 11 is derived. It is to be noted that the above-mentioned masking refers to the phenomenon that a signal becomes inaudible because it is masked by another signal. Masking effects include the time base masking effect by an audio signal on the time base and the simultaneous masking effect by an audio signal on the frequency base. By this masking effect, even if there is any noise at the portion subject to masking, such noise will be inaudible. For this reason, in an actual audio signal, noise within a range subject to masking is considered allowable noise.

Attention is now drawn to an actual example of multiplication coefficients (filter coefficients) of respective multipliers of the convolution filter circuit 23. Assuming that the coefficient of a multiplier M corresponding to an arbitrary band is 1, multiplying operation is carried out as follows: at the multiplier M-1, the filter coefficient 0.15 is multiplied by outputs from respective delay elements; at the multiplier M-2, the filter coefficient 0.0019 is multiplied by those outputs; at the multiplier M-3, the filter coefficient 0.0000086 is multiplied by those outputs; at the multiplier M + 1, the filter coefficient 0.4 is multiplied by those outputs; at the multiplier M + 2, the filter coefficient 0.007 is multiplied by those outputs. Thus, convolution processing of the bark spectrum SB is carried out. It is to be noted that M is an arbitrary integer of 1 to 25.

Thereafter, an output of the convolution filter circuit 23 is supplied to a subtracter 24 which serves to determine a level $\alpha$ corresponding to an allowable noise level, which will be described later, in the convoluted region. It is to be noted that the level $\alpha$ corresponding to the allowable noise level (allowed noise level) is a level to correspond with the allowed noise level in every band of the critical band when carrying out deconvolution processing as described later. Here, an allowed function (function representing the masking level) for determining the level $\alpha$ is supplied to the subtracter 24. By increasing or decreasing this allowed function, control of the level $\alpha$ is carried out. This allowed function is supplied from a (n-ai) function generator 25 which will be described later.

When the number given in order from a lower frequency band of bands of the critical band is assumed to be i, the level of $\alpha$ corresponding to the allowed noise level is determined by the following equation:

$$\alpha = S - (n-ai) \qquad (5)$$

where n and a are respective constants (a>O), and S is the intensity of a convolution processed bark spectrum. In the above equation (5), (n-ai) represents an allowed function. In this embodiment, n is set to 38 and a is set to 1. There then results no degradation of sound quality, and satisfactory coding is thus carried out.

In this way, the level $\alpha$ is determined. These data are transmitted to a divider 26 which serves to apply deconvolution to the level $\alpha$ in the convolution region. Accordingly, by carrying out this deconvolution, a masking spectrum is provided from the level $\alpha$. Namely, this masking spectrum becomes an allowed noise spectrum. It is to be noted that while the above-mentioned deconvolution processing requires a complicated operation, a simplified divider 26 is used in this embodiment to carry out deconvolution.

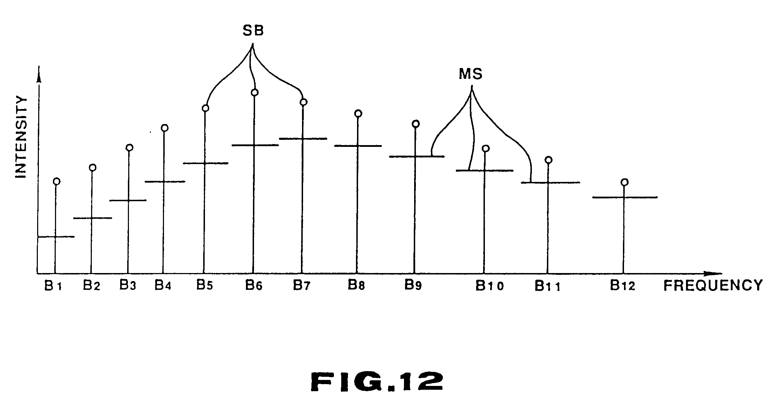

Then, the above-mentioned masking spectrum is transmitted to a subtracter 28 through a synthesis circuit 27. Here, the subtracter 28 is supplied with an output of the energy detector 22 in every band, that is, the previously described bark spectrum SB, through a delay circuit 29. Accordingly, at this subtracter 28, a subtractive operation between the masking spectrum and the bark spectrum SB is carried out. Thus, as shown in Figure 12, the portion of the bark spectrum SB of which level is lower than the level indicated by the level of the masking spectrum MS is subjected to masking.

An output from the subtracter 28 is taken out through an allowed noise corrector 30 and the output terminal 31, and is sent to a ROM, etc. (not shown) at which, for example, allocated bit number information are stored. This ROM, etc. serves to supply allocated bit number information every band in dependence upon an output (difference level between energy of each band and an output of the noise level setting means) obtained through the allowed noise corrector 30 from the subtracter 28. This allocated bit number information is supplied to the adaptive bit allocation encoder 18, whereby spectrum data on the frequency base from the DCT circuits 13, 14 and 15 are quantized by bit numbers allocated to respective bands.

In short, the adaptive bit allocation encoder 18 serves to quantize spectrum data in respective bands by bit numbers allocated in dependence upon levels of differences between energies of respective bands of the critical band and an output of the noise level setting means. It is to be noted that a delay circuit 29 is provided in order to delay the bark spectrum SB from the energy detector 22 by taking into consideration delay quantities at respective circuits preceding the synthesis circuit 27.

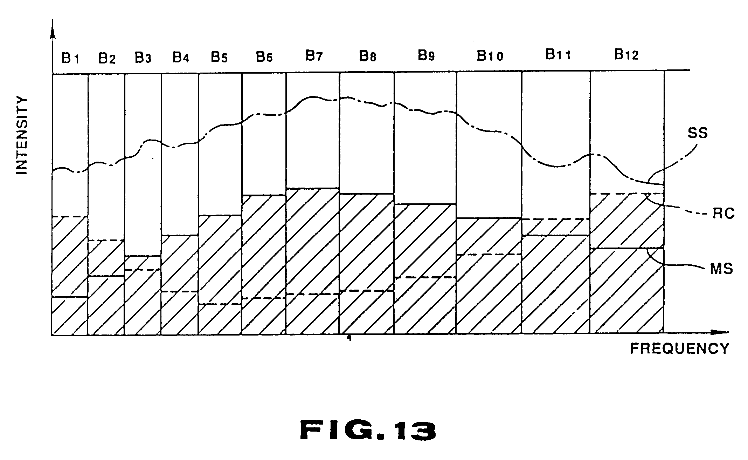

Meanwhile, in synthesis at the above-described synthesis circuit 27, it is possible to synthesize data indicating the so-called minimum audible curve RC which is the human hearing characteristic as shown in Figure 13 supplied from a minimum audible curve generator 32 and the above-mentioned masking spectrum MS. In this minimum audible curve, if the noise absolute level is below the minimum audible curve, this noise cannot be heard. Furthermore, even if coding is the same, the minimum audible curve would vary, for example, in dependence upon variation of a reproducing volume at the time of reproduction. However, it is to be noted that, since there is not so great a variation in the manner in which music enters, for example, a 16-bit dynamic range in actual digital systems, if it is assumed that quantization noise of, for example, the frequency band most easily heard in the vicinity of 4 KHz, quantization noise less than the level of the minimum audible curve is considered to be not heard in other frequency bands. Accordingly, noise in the vicinity of 4 KHz of a word length that the system has is not heard, and an allowed noise level is provided by synthesizing the minimum audible curve RC and the masking spectrum MS, the allowed noise level in this case is permitted to be the level up to the portion indicated by hatching in Figure 13. It is to be noted that, in this embodiment, the level of 4 KHz of the minimum audible curve is caused to correspond with the minimum level correspond to, for example, 20 bits. In Figure 13, signal spectrum SS is also shown.

It is to be noted that, as explained with reference to Figures 3 to 6, in the critical band where the minimum audible curve is considered as an allowed noise, bit allocation for each small band obtained by dividing the critical band into smaller bands is carried out. Namely, at the comparator 35, the minimum audible curve from the minimum audible curve generator 32 and the masking spectrum MS from the divider 28 are compared with each other. The compared result is supplied to the synthesis circuit 27, and is taken out as a flag $F_{RC}$ from the output terminal 36. For example, in the bands $B_{11}$ and $B_{12}$ of Figure 13, since the level of the minimum audible curve RC is higher than the level of the masking spectrum MS, this minimum audible curve RC is regarded as an allowed noise, and the flag $F_{RC}$ is set to 1. Thus, the level of the minimum audible curve RC, for example, on the lowest frequency side when the critical band is finely divided, will be transmitted. As previously described above, calculation of allowed noise level for respective bands is carried out on the decoder side.

At the allowed noise level corrector 30, the allowed noise level in an output from the subtracter 28 is corrected on the basis of information of, for example, an equi-loudness curve supplied from a correction information output circuit 33. Here, the equi-loudness curve is a characteristic curve relating to the human hearing characteristic, and is a curve formed by determining sound pressures of sound at respective frequencies which are heard at the same intensity of that of a pure sound, for example, at 1 KHz. This equi-loudness curve is also called an equi-sensitivity curve of loudness. Further, this equi-loudness curve is substantially the same source as the minimum audible curve RC shown in Figure 13. In the equi-loudness curve, for example, in the vicinity of 4 KHz, sound is heard at the same intensity as that at 1 KHz even if the sound pressure is lowered by 8 to 10 dB as compared to that at 1 KHz. In contrast, in the vicinity of 50 KHz, sound cannot be heard at the same intensity as at 1 KHz unless the sound pressure at 50 KHz is higher by about 15 dB than that at 1 KHz. For this reason, it is seen to allow a noise (allowed noise level) above the level of the minimum audible curve to have a frequency characteristic given by a curve corresponding to the equi-loudness curve. From these facts, it is seen that it is adapted for human hearing to correct the allowed noise level by taking the above-mentioned equi-loudness curve into consideration.

Here, the correction information output circuit 33 may be of such a structure to correct the above-mentioned allowed noise level on the basis of information of an error between a detected output of the encoder 18 and a bit rate target value of the final coded data. The reason why such a correction is made is as follows. In general, there are instances where the total number of bits obtained by applying, in advance, temporary adaptive bit allocation to all bit allocation unit blocks may have an error with respect to a fixed bit number (target value) determined by a bit rate of the final coded output data. In such instances, bit allocation is made for a second time, so that the above-mentioned error becomes equal to zero. Thus, when the total allocated bit number is less than the target value, bit numbers of difference are allocated to respective unit blocks to add insufficient bits, while when the total allocated bit number is greater than the target value, bit numbers of difference are allocated to respective unit blocks to reduce surplus bits.

To carry this out, an error from the target value of the total allocation bit number is detected. In dependence upon this error data, the correction information output circuit 33 outputs correction data for correcting respective allocated bit numbers. Here, in the case where the above-mentioned error data indicates insufficient bit number, an increased number of bits are used per unit block. Thus, consideration can be made in connection with the case where the data quantity is greater than the target value. In contrast, in the case where the above-mentioned error data are data indicating a remainder, a lesser number of bits can be used per unit block. Thus, consideration can be made in connection with the case the data quantity is less than the target value. Accordingly, from the correction information output circuit 33, in dependence upon this error data, data of the correction value for correcting an allowed noise level supplied from the subtracter 28 for example, on the basis of information data of the equi-loudness curve are outputted. A correction value as described above is transmitted to the allowed noise corrector 30. Thus, the allowed noise level from the subtracter 28 is corrected.

Further, there may be employed a configuration such that the above-described synthesis processing for the minimum audible curve is not carried out. In this case, the minimum audible curve generator 32 and the synthesis circuit 27 become unnecessary, and an output from the subtracter 24 is subjected to deconvolution at the divider 26, and is transmitted immediately to the subtracter 28.

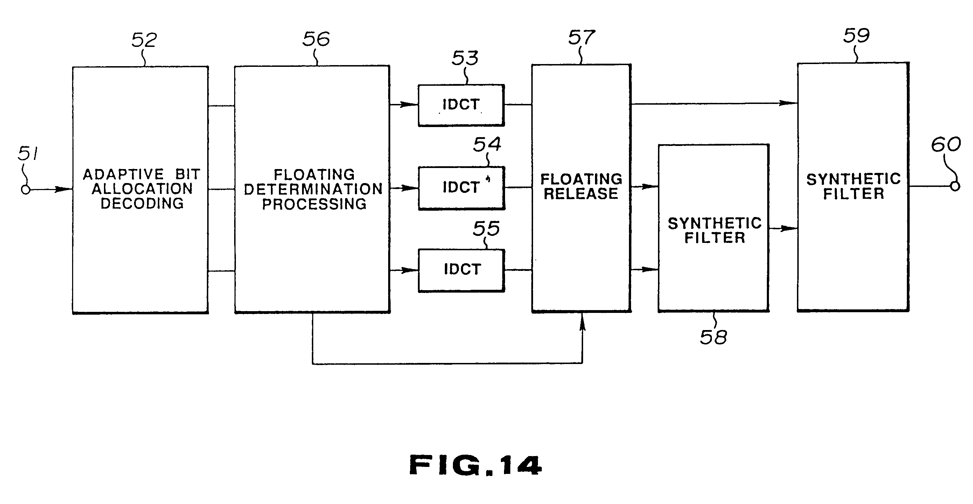

Further, as shown in Figure 14, in the case of carrying out the block floating processing and the floating release processing before and after the inverse orthogonal transform (IDCT, that is, inverse discrete cosine transform) processing on a decoder side, an approach may be employed to take a logical sum of absolute values of respective words in a block, thereby making it possible to determine a floating coefficient.

In Figure 14, an input terminal 51 is supplied with coded data on the frequency base as obtained from the output terminal 19 of Figure 1. These coded data are supplied to an adaptive bit allocation decoder 52, at which they are subjected to decoding processing. Such data on the frequency base which have undergone adaptive bit allocation decoding processing are sent to a block floating processing circuit 56, at which floating processing every block is implemented thereto. Thereafter, the data thus processed respectively undergo, at circuits 53, 54 and 55 in the example of Figure 14, processing opposite to the processing at the respective orthogonal transform circuits 13, 14 and 15 of Figure 1. These outputs from the IDCT circuits 53, 54 and 55 are supplied to a floating release circuit 57, at which floating release processing every block is carried out on the basis of floating information from the block floating processing circuit 56. Outputs of respective bands from the floating release circuit 57 undergo, by using synthetic filters 58 and 59, processing opposite to the processing by the band division filters 11 and 12 of Figure 1, so that outputs in respective bands are synthesized. The output thus synthesized is derived from the output terminal 60.

It is to be noted that this invention is not limited to the above-described embodiment, but is applicable, for example, not only to a signal processing apparatus for an audio signal but also to a signal processing apparatus for a digital speech signal or a digital video signal, etc.

With the coding apparatus described, when allowed noise levels for each critical band are determined by the minimum audible level, bit allocation is carried out by allowed noise levels for each small band obtained by further dividing the critical band, so as only to transmit a flag indicating this, thus avoiding the necessity of sending allowed noise levels for every small band. Accordingly, accurate allowed noise levels can be provided without increasing the quantity of auxiliary information. This leads to the fact that signal quantity can be improved without degrading bit compression efficiency. In addition, even if an absolute value of the minimum limit level is altered later, compatibility can be maintained.

## Claims

1. A coding apparatus for a digital signal, the apparatus comprising:

    a band division filter (11) for dividing an input digital signal into signal components in a plurality of frequency bands;

    a block floating circuit (16) for implementing, every block, floating processing of an output signal of the band division filter (11);

    a plurality of orthogonal transform circuits (13, 14, 15) for orthogonally transforming respective output signals on the time base of the block floating circuit (16) to signals on the frequency base; and

    an adaptive bit allocation encoder (18) for dividing output signals of the orthogonal transform circuits (13, 14, 15) into signal components in critical bands adaptively to allocate bit numbers thereto on the basis of allowed noise levels of respective critical bands;

    wherein the length in the time base direction of the blocks is caused to be variable, and the length in the time base direction of the blocks and a floating coefficient used in the floating processing are determined on the basis of the same index.

2. Apparatus according to claim 1 wherein said index is given by a logical sum of absolute values of respective words.

3. A coding apparatus for a digital signal, the apparatus comprising:

    a band division filter (11) for dividing an input digital signal into signal components in a plurality of frequency bands;

    a block floating circuit (16) for implementing, every block, floating processing of an output signal of the band division filter (11);

    a plurality of orthogonal transform circuits (13, 14, 15) for orthogonally transforming respective output signals on the time base of the block floating circuit (16) to signals on the frequency base;

    an adaptive bit allocation encoder (18) for dividing output signals of the orthogonal transform circuits (13, 14, 15) into signal components in critical bands adaptively to allocate bit numbers thereto on the basis of allowed noise levels of respective critical bands;

    allowed noise level calculation means (20) for calculating allowed noise levels obtained within the critical band every critical band; and

    comparison means (35) for comparing a corresponding allowed noise level with a minimum audible level to raise or set a flag when the minimum audible level is higher than the allowed noise level;

wherein, in the critical band where the comparison means (35) raises the flag, the level of the minimum audible curve is selected as the allowed noise level.

4. Apparatus according to claim 3 wherein the allowed noise level calculation means (20) calculates an allowed noise level from the energy of every critical band and the minimum audible curve, and further calculates an allowed noise level on the basis of an error between output information and a bit rate target value of the final coded data.

5. Apparatus according to claim 4 wherein bits allocated to respective unit blocks are increased or decreased by using an output of the allowed noise level calculation means.

6. A coding apparatus for a digital signal, the apparatus comprising:

a band division filter (11) for dividing an input digital signal into signal components in a plurality of frequency bands;

a block floating circuit (16) for implementing, every block, floating processing of an output signal of the band division filter (11);

a plurality of orthogonal transform circuits (13, 14, 15) for orthogonally transforming respective output signals on the time base of the block floating circuit (16) to signals on the frequency base;

an adaptive bit allocation encoder (18) for dividing output signals of the orthogonal transform circuits (13, 14, 15) into signal components in critical bands adaptively to allocate bit numbers thereto on the basis of allowed noise levels of respective critical bands;

allowed noise level calculation means (20) for calculating allowed noise levels obtained within the critical band every critical band; and

comparison means (35) for comparing a corresponding allowed noise level with a minimum audible level to raise or set a flag when the minimum audible level is higher than the allowed noise level;

wherein the length in the time base direction of the block is caused to be variable, and the length in the time base direction of the block and a floating coefficient at the time of the floating processing are determined on the basis of the same index; and

wherein, in the critical band where the comparison means (35) raises the flag, the level of the minimum audible curve is selected as the allowed noise level.

7. Apparatus according to any one of the preceding claims wherein said orthogonal transform circuits (13, 14, 15) are discrete cosine transform circuits.

**FIG.1**

10 DC~20KHz

11 BAND DIVISION

12 BAND DIVISION

5K~10KHz

10K~20KHz

DC~5KHz

16 BLOCK FLOATING DETERMINATION PROCESSING

13 DCT

14 DCT

15 DCT

17 FLOATING RELEASE

18 ADAPTIVE BIT ALLOCATION CODING

19

20 ALLOWED NOISE CALCULATION

32 MIN. AUDIBLE CURVE

35 COMPARISON

EP 0 506 394 A2

**FIG.2**

**FIG.3**

**FIG.4**

START

*S11*

NO ← FLAG F$_{RC}$=1?

YES

*S13* — SET FIXED ALLOWED NOISE LEVEL IN CRITICAL BAND

CALCULATE ALLOWED NOISE LEVELS EVERY SMALL BAND — *S12*

BIT ALLOCATION DECODING — *S14*

END

# FIG.5

B

BB$_1$  BB$_2$  BB$_3$  BB$_4$

LEVEL →

*NL2*

*NL1*

*RC*

*NL4*

*NL3*

FREQUENCY →

# FIG.6

$T_{BL}$

BL

BLR1
$\left(\begin{array}{c}\text{MAX. ABSOLUTE} \\ \text{VALUE MXR1}\end{array}\right)$

BLR2
$\left(\begin{array}{c}\text{MAX. ABSOLUTE} \\ \text{VALUE MXR2}\end{array}\right)$

$T_{BL}/2$

# FIG.7

$T_{BL}$

BL

BLR1
$\left(\begin{array}{c}\text{MAX. ABSOLUTE} \\ \text{VALUE MXR1}\end{array}\right)$

BLR2
$\left(\begin{array}{c}\text{MAX. ABSOLUTE} \\ \text{VALUE MXR2}\end{array}\right)$

$T_{BL}/2$

| BLS1 | BLS2 | BLS3 | BLS4 |
|------|------|------|------|
| (MXS1) | (MXS2) | (MXS3) | (MXS4) |

$T_{BL}/4$

# FIG.8

START

CALCULATION OF ABSOLUTE VALUE — S111

MAX. VALUE DETECTION OR LOGICAL SUM OPERATION — S112

*S113*
PROCESSING FOR ALL WORDS IN EACH BLOCK COMPLETED ? — NO

YES

LEFT SHIFT — S114

*S115*
MSB "1" DETECTED ? — NO

YES

*S116*
MAX. VALUE IN EACH BLOCK OBTAINED ? — NO

YES

DETERMINATION OF BLOCK SIZE — S117

CALCULATE MAX. ABSOLUTE VALUE OF DETERMINED BLOCK — S118

NORMARIZE — S119

*S120*
ALL WORD NORMARIZED ? — NO

YES

*S121*
PROCESSING FOR ALL WORDS IN LARGE BLOCK COMPLETED — NO

YES

ORTHOGONAL TRANSFORM — S122

END

# FIG. 9

**FIG.10**

18

**FIG.11**

EP 0 506 394 A2

**FIG.12**

EP 0 506 394 A2

FIG.13

**FIG.14**

EP 0 506 394 A2

BL

| BLS1 | BLS2 | BLS3 | BLS4 |

TIME $\longrightarrow$

# FIG.15

START

CALCULATE ENERGIES
OF RESPECTIVE BLOCKS — S31

DETERMINATION
OF BLOCK SIZE — S32

CALCULATE MAX. ABSOLUTE
VALUE OF BLOCK
TO CARRY OUT BLOCK
FLOATING PROCESSING — S33

ORTHOGONAL
TRANSFORM — S34

END

# FIG.16